## Europäisches Patentamt

## European Patent Office

## Office européen des brevets

(11) Veröffentlichungsnummer: **0 278 052**
**A1**

(12) **EUROPÄISCHE PATENTANMELDUNG**

(21) Anmeldenummer: **87114752.6**

(22) Anmeldetag: **09.10.87**

(51) Int. Cl.4: **E01H 10/00** , E01C 19/20 , G01P 13/00

(30) Priorität: **09.01.87 DE 3700505**

(43) Veröffentlichungstag der Anmeldung:
**17.08.88 Patentblatt 88/33**

(84) Benannte Vertragsstaaten:
**AT CH DE FR GB IT LI**

(71) Anmelder: **Ing. Alfred Schmidt GmbH**

**D-7822 St. Blasien(DE)**

(72) Erfinder: **Schneider, Michael, Johannes,
Dipl.-Ing.
Schlüchtseeweg 8
D-7821 Grafenhausen-Rothaus(DE)**

(74) Vertreter: **Grättinger, Günter
Wittelsbacherstrasse 5 Postfach 16 49
D-8130 Starnberg(DE)**

(54) **Einrichtung zur Streugutkontrolle an einem Streugerät für den Winterstrassendienst.**

(57) Eine Einrichtung zur Streugutkontrolle an einem Streugerät für den Winterstraßendienst, welches am Heck eines Straßendienstfahrzeugs angebracht ist, mit einem Fühler zur Ermittlung der Streugutmenge, welcher mit einer elektronischen Auswerteschaltung elektrisch verbunden ist, in welcher die Meßsignale erfaßt, ausgewertet und in Ausgangssignale zur Betätigung einer Anzeigevorrichtung im Führerhaus des Straßendienstfahrzeugs umgewandelt werden, zeichnet sich durch eine besonders hohe Ansprechempfindlichkeit dadurch aus, daß als Fühler ein Ultraschallgeber vorgesehen ist, dessen Meßstrecke derart angeordnet ist, daß sie vom Streugut durchschnitten wird.

## Einrichtung zur Streugutkontrolle an einem Streugerät für den Winterstraßendienst

Die Erfindung betrifft eine Einrichtung zur Streugutkontrolle gemäß der im Patentanspruch 1 angegebenen Gattung.

Bei einer derartigen bekannten Einrichtung erfolgt die Streugutkontrolle mittels sog. Körperschallmikrophone, wobei an einem Fühler vorhandene piezoelektrisch ansprechende keramische Wandlerstäbe durch das Auftreffen von Streugut die mechanische Energie in elektrische Impulse umwandeln. In einer damit verbundenen Auswerteelektronik wird der Streuzustand anhand einer Auswertung der Spannungsimpulse ermittelt. Besonders bei geringen Streudichten und sehr geringen Streubreiten erweisen sich die erzeugten Impulse als zu schwach um eine definierte Signalanzeige sicherzustellen. Des weiteren bestehen bei sehr kleinen Streugutpartikeln (z. B. feines Salz) Probleme wegen der sehr geringen Stoßenergie des Streuguts auf den Fühler.

Demgegenüber liegt der vorliegenden Erfindung die Aufgabe zugrunde, eine Einrichtung der gattungsgemäßen Art zu schaffen, welche besonders empfindlich ist, d. h. auch bei geringen Streugutmengen, -dichten und -geschwindigkeiten zuverlässig anspricht.

Diese Aufgabe wird erfindungsgemäß mit den im Kennzeichen von Patentanspruch 1 enthaltenen Merkmalen gelöst.

Es hat sich überraschenderweise gezeigt, daß Ultraschallgeber, welche üblicherweise zur Distanzmessung verwendet werden, wobei sie auf eine bestimmte Geschwindigkeit eingestellt sind, nicht nur auf Streusand bzw. -split sondern auch auf Streusalz, auch mit sehr feiner Körnung, empfindlich ansprechen und zwar im Sinne der Erzeugung eines Störsignals. Diese Erkenntnis wird im Rahmen der vorliegenden Erfindung in einem positiven Sinne genutzt, derart, daß das Störsignal als Anzeige für den Zustand "Streuen" verwendet wird, Da die Abtastung über die Ultraschallwellen berührungsfrei erfolgt, entfällt das beim Stand der Technik häufige Auswechseln des Fühlers. Die Meßstrecke kann auf sehr einfache Weise dem jeweiligen Streuwinkel bzw. an die Entfernung des Ultraschallgebers vom Streuteller angepaßt werden.

In der Ausführungsform gemäß Anspruch 3, nach welchem ein zweiadriges Verbindungskabel zur Auswertevorrichtung vorgesehen ist, besteht die Möglichkeit einer Nachrüstung, indem eine bereits vorhandene bekannte Vorrichtung, welche mit einem zweiadrigen Kabel auskommt, auszutauschen ist gegen die erfindungsgemäße Einrichtung, ohne die Notwendigkeit, ein neues Kabel verlegen zu müssen.

Als Signalanzeigen im Fahrerhaus kommen übliche rote und grüne Signallämpchen in Frage, ggf. auch akkustische Signale.

Die erfindungsgemäße Einrichtung hat insbesondere Bedeutung für die Streugutkontrolle beim Streuen kleiner Mengen, z. B. um etwa 5 g/m², also bei Anwendung neuester Streumethoden, welche die Minimierung der Streugutmenge in Abhängigkeit von den jeweiligen Gegebenheiten zum Ziel haben.

Die erfindungsgemäße Einrichtung eignet sich sowohl für die Streugutkontrolle beim Trockenstreuen, als auch beim Naßstreuen.

Bezüglich weiterer Ausgestaltungen der Erfindung wird auf die Merkmale in einzelnen Unteransprüchen verwiesen.

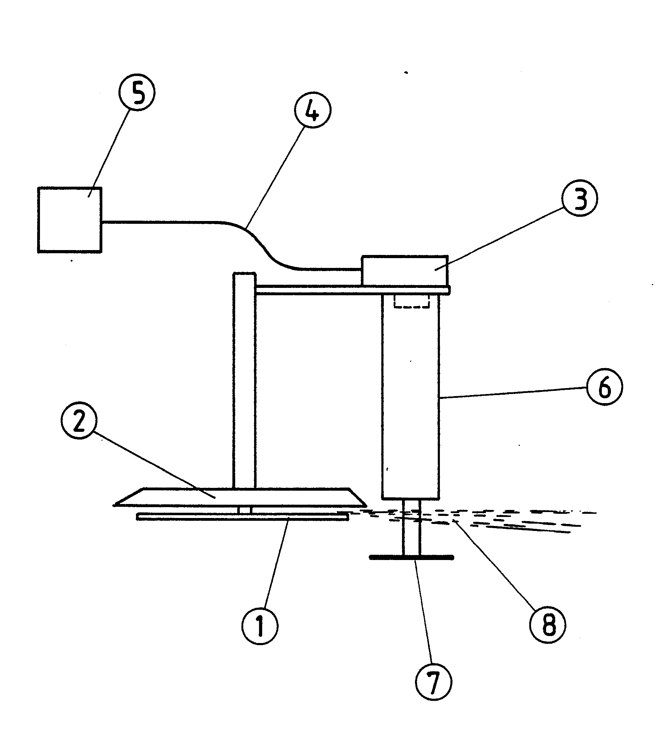

Im folgenden wird ein Ausführungsbeispiel der Erfindung anhand der Zeichnung erläutert.

Einem Streuteller (1) ist ein Ultraschallgeber zugeordnet, welcher einen Ultraschallsender (3) und diesem gegenüber eine Reflektorplatte (7) umfaßt. Die Strecke oberhalb des Streutellers ist durch eine rohrförmige Hülle (6) gegen äußere Einflüsse geschützt. Unterhalb der rohrförmigen Hülle (6) wird das Streugut (8) infolge der Rotation des Streutellers (1) nahezu horizontal ausgeschleudert, wobei die Abdeckung (2) des Streutellers (1) für einen gleichmäßig dünnen Streustrahl sorgt. Beim Durchschneiden der Meßstrecke des Ultraschallgebers in einem schmalen Bereich (9) verhältnismäßig dicht über der Reflektorplatte (7) durch das ausgeschleuderte Streugut wird die auf die Reflektorplatte (7) ausgerichtete Distanzmessung des Ultraschallgebers unterbrochen und es erfolgt eine "Fehlanzeige" die dem Signal für den Zustand "Streuen" entspricht. Dieser Zustand wird in Form von Signalimpulsen über die elektrische Leitungsverbindung (4) an eine elektronische Auswertevorrichtung (5) gegeben, von welcher eine (nicht gezeichnete) Signalleitung für ein Anzeigesignal zum Führerhaus des Straßendienstfahrzeuges, an dessen Heck das Streugerät angebracht ist, verlegt ist.

## Ansprüche

1. Einrichtung zur Streugutkontrolle an einem Streugerät für den Winterstraßendienst, welches am Heck eines Straßendienstfahrzeugs angebracht ist, mit einem Fühler zur Ermittlung der Streugutmenge, welcher mit einer elektronischen Auswerteschaltung elektrisch verbunden ist, in welcher die Meßsignale erfaßt, ausgewertet und in Ausgangssignale zur Betätigung einer Anzeigevorrichtung im Führerhaus des Straßendienstfahrzeugs umgewandelt werden,
dadurch gekennzeichnet,
daß als Fühler ein Ultraschallgeber vorgesehen ist, dessen Meßstrecke derart angeordnet ist, daß sie vom Streugut durchschnitten wird.

2. Einrichtung nach Anspruch 1,
dadurch gekennzeichnet,
daß der Ultraschallgeber einen oberhalb eines Streutellers für das Streugut angeordneten Sender und eine unterhalb des Streutellers angeordnete, die Ultraschallwellen reflektierende Reflektorplatte umfaßt.

3. Einrichtung nach Anspruch 1 oder 2,
dadurch gekennzeichnet,
daß der Ultraschallgeber über ein zweiadriges Kabel mit der Auswertevorrichtung verbunden ist, wobei mittels eines in dem Meßkreislauf eingeschalteten Widerstands die Meßimpulse als Funktion des vom Ultraschallgeber aufgenommenen Stroms erzeugt und an die Auswertevorrichtung weitergegeben werden.

4. Einrichtung nach Anspruch 1,
dadurch gekennzeichnet,
daß bei Vorhandensein von Streugut in der Meßstrecke des Ultraschallgebers die Signalanzeige im Fahrerhaus den Zustand "Streuen" solange anzeigt, als dessen kurzzeitige Unterbrechung weniger als einmal pro Sekunde angezeigt wird.

5. Einrichtung nach Anspruch 4,
dadurch gekennzeichnet,
daß die Signalanzeige als Leuchtsignal ausgebildet ist, welches bei genau einer Unterbrechung pro Sekunde des Zustands "Streuen" blinkt und erst bei einer größeren Zahl von Unterbrechungen erlischt und/oder durch ein anderes Leuchtsignal ersetzt wird, entsprechend dem Zustand "Nicht Streuen".

6. Einrichtung nach Anspruch 1,
dadurch gekennzeichnet,
daß die Ultraschallmeßstrecke 30 bis 40 cm beträgt.

0 278 052

Europäisches Patentamt

EUROPÄISCHER RECHERCHENBERICHT

Nummer der Anmeldung

EP 87 11 4752

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 449 075 (M. PIETSCH FABRIK)<br>* Insgesamt *<br>--- | 1 | E 01 H 10/00<br>E 01 C 19/20<br>G 01 P 13/00 |
| Y | GB-A-1 502 947 (BARTON)<br>* Insgesamt *<br>----- | 1 | |

RECHERCHIERTE SACHGEBIETE (Int. Cl.4)

E 01 H
E 01 C
G 01 P

Der vorliegende Recherchenbericht wurde für alle Patentansprüche erstellt

| Recherchenort | Abschlußdatum der Recherche | Prüfer |
|---|---|---|
| DEN HAAG | 12-04-1988 | DIJKSTRA G. |